# EUROPEAN PATENT APPLICATION

(11) **EP 1 885 089 A1**
(43) Date of publication of application: **06.02.2008**
(21) Application number: 06425551.6
(22) Date of filing: 01.08.2006
(51) Int. Cl.: H04L 12/56, H04Q 7/20

(54) **Method and system for radio resource management in GERAN/UMTS networks, related network and computer program product**

(71) Applicant: Siemens S.p.A., 20126 Milano (IT)
(72) Inventor: Masseroni, Carlo, 20017 Rho (MI) (IT); Trivisonno, Riccardo, 20146 Milano (IT)

(57) **Abstract**

A method of managing radio resources for providing real time services such as conversational and streaming services in a GERAN/UTRAN network. The services are provided by means of application data packets that are exposed to delay in propagating over said network, The delay exhibits jitter, and the radio resources of the network are managed to maintain the delay jitter experienced by the application packets that maximum tolerated value. Preferably, the Quality of Service profiles of the real time services in question are supplemented by means of a parameter (MAJ) representative of the maximum tolerated jitter for the application packets delay.

## Description

### Field of the invention

The present invention is relates to radio resource management in GERAN/UMTS networks. The invention was developed with specific attention paid to its possible use in managing (including scheduling) radio resources for conversational and multimedia streaming services within the packet data transmission domain.

### Description of the related art

In the area of radio resource management in GERAN/UMTS networks the need is continuously felt for improved solutions that may offer, i.a.:
- an improved QoS profile which allows enhanced Admission Control policies as well as enhanced Radio Resource Scheduling procedures; and
- additional information and criteria to fulfil end-to-end QoS requirements.

The object of the invention is thus to provide a fully satisfactory response to those needs.

According to the present invention, that object is achieved by means of a method having the features set forth in the claims that follow. The invention also relates to a corresponding system, a related network as well as a related computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.

The claims are an integral part of the disclosure of the invention provided herein.

A preferred embodiment of the arrangement described herein is thus a method that involves the definition of a new parameter, designated Maximum Acceptable Jitter (MAJ). Such a parameter can be exploited, together with an application transfer delay parameter and an average bandwidth to be guaranteed, to provide an easy-to-implement radio resource scheduling policy which allows at the same time to respect end-to-end QoS requirements of real time services.

Up to now, the Quality of Service (QoS) constraints for conversational and streaming services in GERAN/UMTS networks has been managed without paying attention to the possible impact on the quality of service rendered of the application codec maximum tolerated jitter. Currently, the QoS profile of streaming and conversational services does not contain any information regarding the application audio/video maximum packet delay tolerated jitter. Nevertheless, especially when looking forward to further GERAN/UTRAN evolution addressing the need to support conversational and streaming and the competition of emerging standards, such parameter is seen as a further improvement to the QoS profile of such services.

The arrangement described herein will primarily apply to 3GPP mobile networks (both UTRAN and GERAN) and essentially involves adding a further parameter to be added to the QoS profiles of conversational and streaming services with a view to improving the support of Conversational and Streaming services in GERAN/UTRAN packet switched mobile networks.

A parameter representative of the Maximum Acceptable Jitter will in fact enable the radio resource manager/scheduler on the network side to have available an improved QoS profile which allows enhanced Admission Control policies as well as enhanced Radio Resource Scheduling procedures. This in combination with additional information and criteria to fulfil end-to-end QoS requirements.

A preferred embodiment of the arrangement described herein is thus based on the assumption that, beside the guaranteed bandwidth, the PDU (Packet Data Unit) transfer delay, and the SDU (Service Data Unit) error ratio, the quality of real time services such as conversational or streaming services is also influenced by the application codec maximum tolerated jitter of the application packets delay. In fact, the tolerated jitter may turn out to be one of the most important parameter characterizing audio/video codecs at the application layer. Similarly, the packet delay jitter may represent one of the most critical parameter to be ensured, and this may turn out to have a critical impact on codecs performance and, hence, on the end-to-end Quality of Service as perceived by the user.

### Brief description of the annexed representations

The invention will now be described, by way of example only, with reference to the enclosed representation of a set of UMTS/Radio Access/bearers QoS Attributes for Conversational and Real time service classes within the framework of the arrangement described herein.

### Detailed description of preferred embodiments of the invention

In GERAN/UTRAN networks, service QoS constraints are fulfilled via the definition of a set of "bearers", These are logical connections between couples of network elements through which the data flow is guaranteed according to a set of QoS attributes (and correspondent values) associated to the bearer. Each bearer can be associated to different QoS profiles: i.e. different services can be handled differently in the bearer according to priority, QoS requirements etc.

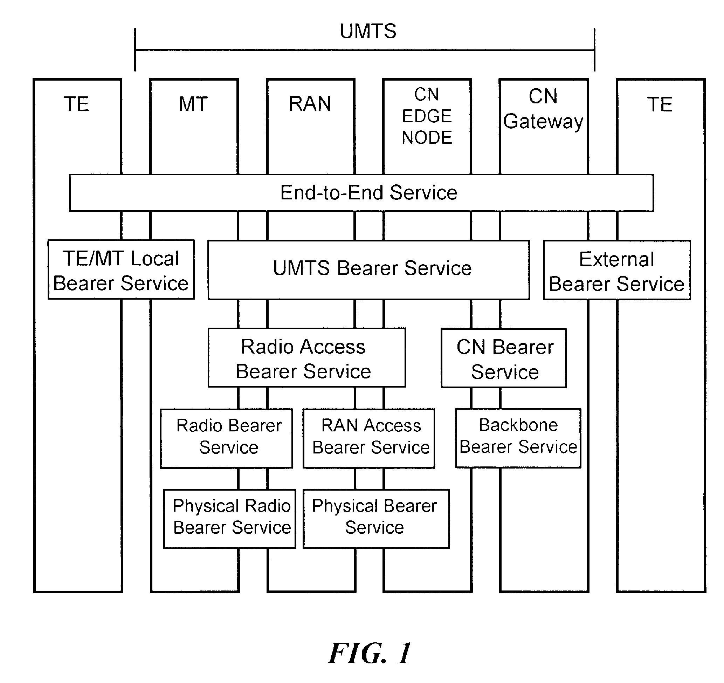

Figure 1 schematically represents a complete set of bearers for UTRAN/GERAN networks. Essentially, the vertical block in the background are representative of connection/service between two terminal equipments, designated TE, provided over a UMTS network as represented by its MT (Mobile Terminal), RAN (Radio Access Network), CN (Core Network) EDGE NODE and CN Gateway entities/functions.

The diagram of Figure 1 illustrates how, in the exemplary arrangement described herein, End-to-End Service attributes are be broken down into a UMTS Bearer Service "sandwiched" between a TE/TM Local Bearer Service and an External Bearer Service.

The UMTS Bearer Service can in turn be broken down into a Radio Access Bearer Service and a CN Bearer Service. The CN Bearer Service is essentially supported by a Backbone Bearer Service, while the Radio Access Bearer Service can again be broken down into a Radio Bearer Service and a RAN Access Bearer Service, these two being supported by a Physical Radio Bearer Service and a Physical Bearer Service, respectively.

The arrangement described herein primarily relies on two distinct bearers: the UMTS Bearer Service (acting between the MT and the CN gateway) and the Radio Access Bearer Service (acting between the MT and the CN EDGE NODE).

In connection with the desired improvements in UMTS/Radio Access/bearers QoS Attributes for Conversational and Real time service classes, it will be recalled that UMTS technical specifications define four different traffic classes for UMTS bearer service and for Radio Access Bearer service, namely:
- Conversational Class,
- Streaming Class,
- Interactive Class, and
- Background Class.

Each traffic class is characterized by a QoS profile made of a set of QoS parameters, as indicated in Table 1 that follows.

Real time services (VideoCall, VoIP-like services, IPTV, Video streaming etc.) are supported via Conversational and Streaming Classes.

**TABLE 1**

| Traffic class | Conversational | Streaming | Interactive | Background |
|---|---|---|---|---|
| Maximum bitrate | X | X | X | X |
| Delivery order | X | X | X | X |
| Maximum SDU size | X | X | X | X |
| SDU format information | X | X | | |
| SDU error ratio | X | X | X | X |
| Residual bit error ratio | X | X | X | X |
| Delivery of erroneous SDUs | X | X | X | X |
| Transfer delay | X | X | | |
| Guaranteed bit rate | X | X | | |
| Traffic handling priority | | | X | |
| Allocation/R etention priority | X | X | X | X |
| Source statistics descriptor | X | X | | |
| Signalling indication | | | X | |

The arrangement described herein relies on the introduction of a new QoS parameter, named MAJ (Maximum Acceptable Jitter), for both Conversational and Streaming Classes. The MAJ is defined as the maximum delay jitter acceptable for a packet to be received on time and decoded properly.

From the packet radio network point of view, assuming that no fragmentation arises in converting IP packets into radio network SDU (assumption motivated by the usual size of multimedia application/transport layer packets), the value assigned to MAJ still represents the maximum jitter which can be admitted to SDU delay properly delivered. The MAJ parameter and value can be used to:
- implement enhanced admission control policies, and
- introduce additional SDU scheduling criteria.

With the introduction of this parameter, the 3GPP table introduced in the foregoing would take the form of Table 2 below.

**Table 2**

| Traffic Class | Conversational | Streaming | Interactive | Background |
|---|---|---|---|---|
| Maximum bitrate | X | X | X | X |
| Delivery order | X | X | X | X |
| Maximum SDU size | X | X | X | X |
| SDU format information | X | X | | |
| SDU error ratio | X | X | X | X |
| Residual bit error ratio | X | X | X | X |
| Delivery of erroneous SDUs | X | X | X | X |
| Transfer delay | X | X | | |
| Guaranteed bit rate | X | X | | |
| Traffic handling priority | | | X | |
| Allocation/ Retention priority | X | X | X | X |
| Source statistics descriptor | X | X | | |
| Signalling Indication | | | X | |
| MAJ | X | X | | |

Where MAJ is the Maximum Acceptable Jitter.

In order to communicate to the base station (BSS) the new parameter and its value within a Packet Flow Context, the Aggregate BSS QoS Profile (ABQP) as defined in 3GPP TS 24.008 is modified. This information element indicates the Aggregate BSS QoS Profile (ABQP) for a BSS Packet Flow Context or an MBMS Service Context. The ABQP is considered to be a single parameter with multiple data transfer attributes as defined in 3GPP TS 23.107.

The element coding is depicted in Table 3 below.

**Table 3**

| | 8 | 7 | 6 | 5 | 4 | 3 | 2 | 1 |
|---|---|---|---|---|---|---|---|---|
| octet 1 | IEI | | | | | | | |
| octet 2, 2a | Length Indicator | | | | | | | |
| octet 3-? | Rest of element coded as the value part of the QoS information element in 3GPP TS 24.008, not including 3GPP TS 24.008 IEI and length indicator. The shorter 3-byte form of QoS information is not allowed in BSSGP PDUs. | | | | | | | |

The part which is modified is the Quality of Service information element, which has the format depicted in Table 4 below.

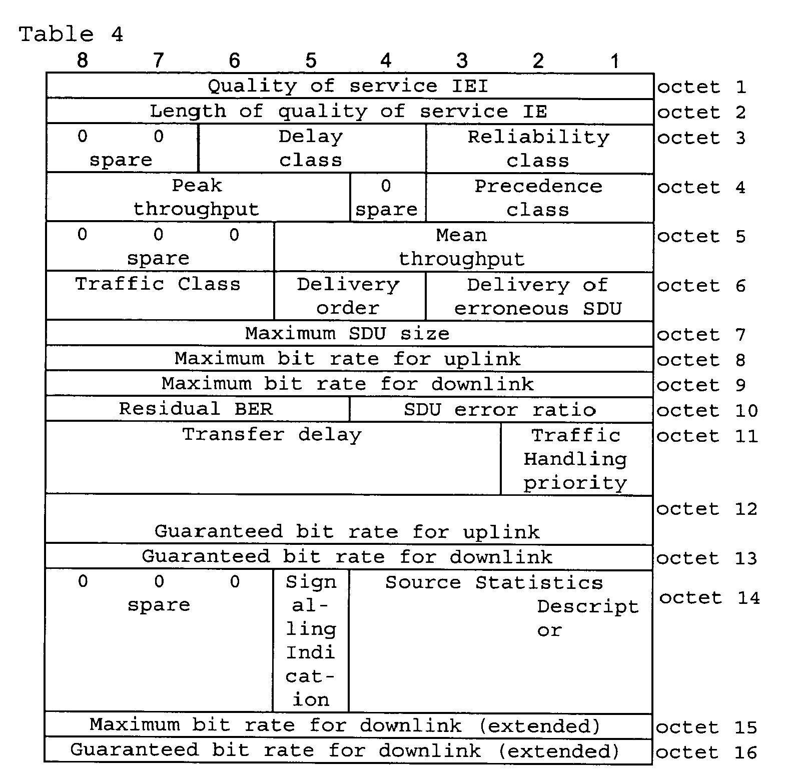

With the introduction of the MAJ parameter field, the Quality of Service information element could appear as depicted in Table 5 below.

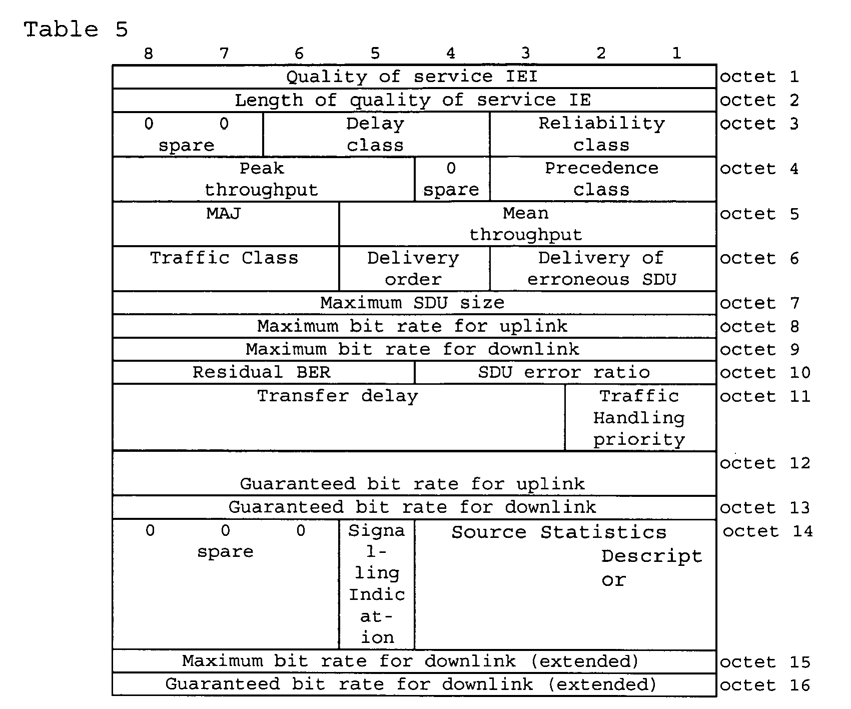

Introducing the MAJ parameter within the framework of the data structure of QoS-related parameters as contemplated by standards such as the 3GPP standard leads to a significant improvement in Radio Resource management and scheduling strategies (including admission control policies).

The main advantages related to including the MAJ parameter among these parameters would include i.a. the ability of introducing:
- effective static radio resource pre-allocation/admission control criteria for conversational and streaming services, and
- effective static pre-scheduling rules for conversational and real time services, both for uplink (UL) and downlink (DL) transmission, regardless the actual codecs activity.

Consequently, without prejudice to the underlying principles of the invention, the details and the embodiments may vary, even appreciably, with reference to what has been described by way of example only, without departing from the scope of the invention as defined by the annexed claims.

## Claims

1. A method of managing radio resources for providing real time services in GERAN/UMTS networks, wherein said services are provided by means of application data packets exposed to delay in propagating over said network, said delay exhibiting jitter, the method including the steps of setting a maximum tolerated jitter for said application packets delay and managing said resources to maintain the delay jitter experienced by said application packets within said maximum tolerated jitter.

2. The method of claim 1, **characterized in that** real time services include conversational and streaming services.

3. The method of any of claims 1 and 2, **characterized in that** includes the steps of:
- providing Quality of Service profiles of said real time services, and
- including in the Quality of Service profiles of said real time services a parameter (MAJ) representative of said maximum tolerated jitter for said application packets delay.

4. The method of any of the previous claims, **characterized in that** it includes the step of managing said resources to maintain said delay jitter experienced by said application packets within said maximum tolerated jitter together with at least one entity selected out of:
- the bandwidth guaranteed to said application packets;
- the Packet Data Unit transfer delay of said application packets; and
- the Service Data Unit error ratio of said application packets.

5. The method of any of the previous claims, **characterized in that** it includes the step of selecting said maximum tolerated jitter as the maximum jitter which can be admitted for delay experienced by Service Data Units properly delivered over said network.

6. A system for providing real time services in GERAN/UMTS networks, wherein said services are provided by means of application data packets exposed to delay in propagating over said network, said delay exhibiting jitter, the system including a radio resource manager configured for managing the radio resources of said packet data network to maintain the delay jitter experienced by said application packets within a maximum tolerated jitter for said application packets delay.

7. The system of claim 6, **characterized in that** real time services include conversational and streaming services.

8. The system of either of claims 6 or 7, **characterized in that** said radio resource manager is configured for operating on the basis of Quality of Service profiles of said real time services, wherein said Quality of Service profiles of said real time services include a parameter (MAJ) representative of said maximum tolerated jitter for said application packets delay.

9. The system of any of claims 6 to 8, **characterized in that** said radio resource manager is configured to maintain said delay jitter experienced by said application packets within said maximum tolerated jitter together with at least one entity selected out of:
- the bandwidth guaranteed to said application packets;
- the Packet Data Unit transfer delay of said application packets; and
- the Service Data Unit error ratio of said application packets.

10. The method of any of the previous claims, **characterized in that** said radio resource manager is configured for operating on the basis of said maximum tolerated jitter as the maximum jitter which can be admitted for delay experienced by Service Data Units properly delivered over said network.

11. GERAN/UMTS networks including a system according to any of claims 6 to 10.

12. A computer program product, loadable in the memory of at least one computer and including software code portions for performing the method of any of claims 1 to 5.
